(19) Europäisches Patentamt

European Patent Office

Office européen des brevets

(11) Veröffentlichungsnummer: **0 318 744**

**A1**

(12) **EUROPÄISCHE PATENTANMELDUNG**

(21) Anmeldenummer: 88118887.4

(51) Int. Cl.⁴: **F16L 37/00**

(22) Anmeldetag: 12.11.88

(30) Priorität: 04.12.87 DE 3741167

(43) Veröffentlichungstag der Anmeldung:
07.06.89 Patentblatt 89/23

(84) Benannte Vertragsstaaten:
AT BE CH DE ES FR GB GR IT LI LU NL SE

(71) Anmelder: **Calmic GmbH**
**Gutenbergstrasse 4**
**D-6457 Maintal-Bischofsheim(DE)**

(72) Erfinder: **Rieg, Hans-Jürgen**
**Eichwaldstrasse 6**
**D-6457 Maintal 1(DE)**

(74) Vertreter: **Stoffregen, Hans-Herbert, Dr.**
**Dipl.-Phys. et al**
**Patentanwälte Strasse & Stoffregen**
**Salzstrasse 11a**
**D-6450 Hanau(DE)**

(54) **Vorrichtung zum flüssigkeitsdichten Verbinden zweier Rohre.**

(57) Gegenstand der Erfindung ist eine Vorrichtung zum flüssigkeitsdichten Verbinden des Endes (3) eines ersten Rohres (1) mit einem zweiten Rohr (2), wobei gegebenenfalls das Ende (3) des ersten Rohres (1) abgeschrägt ist. Das Ende (3) des ersten Rohrs (1) ist von einer Muffe (4) flüssigkeitsdicht umgeben. Die Muffe (4) enthält in ein Loch (5) des zweiten Rohres (2) einrastende Krallen (7). Auf der Außenseite der Muffe (4) ist eine Dichtung (9) angeordnet, die mit einer auf die Muffe (4) aufgesetzten Haube (13) flüssigkeitsdicht zwischen dem zweiten Rohr (2) und der Muffe (4) eingespannt ist.

Fig. 1

EP 0 318 744 A1

## Vorrichtung zum flüssigkeitsdichten Verbinden zweier Rohre

Die Erfindung bezieht sich auf eine Vorrichtung zum flüssigkeitsdichten Verbinden des Endes eines ersten Rohres mit einem zweiten Rohr, wobei gegebenenfalls das Ende des ersten Rohres abgeschrägt ist.

Bekannt ist es, das Ende des einen Rohres an einer Öffnung eines zweiten Rohres anzulöten oder anzuschweißen. Löt- und Schweißarbeiten zur flüssigkeitsdichten Verbindung zweier Rohre erfordern großes Geschick und sind besonders zeitaufwendig. Außerdem können diese Arbeiten häufig vor Ort wegen der Nähe der Rohre zu nicht temperaturbeständigen oder brennbaren Gegenständen nicht durchgeführt werden.

Um Rohre miteinander zu verbinden, können auch Rohrstücke mit seitlichen Abzweigen verwendet werden. Derartige Rohrstücke sind vorgeformt. Der jeweilige Abzweig legt einen bestimmten Winkel des anzuschließenden Rohrstückes fest. Die Rohrstücke müssen an drei Stellen mit anderen Rohren verbunden werden. Außerdem ist das seitliche Rohrstück genau an den Winkel des Abzweigs anzupassen. Die Verbindung von Rohren mit derartigen Rohrstücken ist daher ebenfalls zeitaufwendig. Besondere Sorgfalt ist bei der Ausrichtung des Abzweigs und des Rohrendes notwendig.

Der Erfindung liegt die Aufgabe zugrunde, eine einfach zu handhabende Vorrichtung zum flüssigkeitsdichten Verbinden des Endes eines ersten Rohres mit einem zweiten Rohr zu entwickeln, wobei gegebenenfalls das Ende des ersten Rohres abgeschrägt ist.

Die Aufgabe wird erfindungsgemäß dadurch gelöst, daß das Ende des ersten Rohrs von einer Muffe flüssigkeitsdicht umgeben ist, die in ein Loch des zweiten Rohres einrastende, federnde Krallen aufweist, und daß auf der Außenseite der Muffe eine Dichtung angeordnet ist, die gegebenenfalls mit einer auf die Muffe aufgesetzten Haube flüssigkeitsdicht zwischen dem zweiten Rohr und der Muffe eingespannt ist.

Mit dieser Vorrichtung kann das Ende des ersten Rohres sehr schnell und ohne großen Aufwand an das zweite Rohr angeschlossen werden. Es muß eine auf die Muffe bzw. die Krallen abgestimmte Öffnung im zweiten Rohr vorhanden sein, oder hergestellt werden. In die Öffnung wird sodann die als Einheit vorhandene Muffe mit Haube und Dichtring sowie der unmittelbar am zweiten Rohr anliegenden Dichtung eingesetzt. Sodann wird das erste Rohr durch die zuvor beschriebene Einheit durchgesteckt, um im zweiten Rohr festgelegt zu werden. Die Muffe mit Haube und Dichtring sind aus herstellungstechnischen Gründen Einzelteile. Selbstverständlich können Muffe und Haube auch einteilig z.B. als Drehteil hergestellt werden. Der Anschluß kann mit wenigen, einfachen Handgriffen hergestellt werden. Es entfallen Schweiß- oder Lötarbeiten und Rohrzwischenstücke mit Abzweigen. Die Vorrichtung weist eine gewisse Nachgiebigkeit in bezug auf den Winkel zwischen den Rohren auf, d.h., est ist eine Angleichung an geringe Abweichungen von vorgesehenen Winkeln zwischen beiden Rohren möglich.

Vorzugsweise weist das Ende des ersten Rohres Einkerbungen auf, in die von der Muffe ausgehende Nasen einfügbar bzw. einrastbar sind. Durch diese Ausführungsform ist die axiale Lage des in das zweite Rohr ragenden ersten Rohres festgelegt. Das erste Rohr hat einen definierten Sitz. Außerdem verhindern die Nasen in den Einkerbungen eine unkontrollierte Verschiebung des Rohres während der Anschlußarbeiten bzw. bei der späteren Benutzung.

Bei einer bevorzugten Ausführungsform ist zwischen der dem zweiten Rohr abgewandten Stirnseite der Muffe und der Haube eine Ringdichtung angeordnet. Diese Ringdichtung verhindert, daß über den Spalt zwischen der Muffe und dem Rohr Flüssigkeit aus den beiden Rohren austreten kann. Die feste Einspannung der Ringdichtung wird durch die Haube gewährleistet. Die am zweiten Rohr anliegende Dichtung wird durch die Muffe und Haube festgelegt.

Es ist günstig, wenn die Muffe einen ersten Abschnitt, der einen an die Dichtung angepaßten Außendurchmesser aufweist und einen zweiten Abschnitt enthält, dessen Außendurchmesser größer ausgebildet ist. Die Dichtung wird bereits beim Einrasten der Krallen am Rand der Öffnung des zweiten Rohres vorgespannt und in ihrer Lage fixiert.

Eine zweckmäßige Ausführungsform besteht darin, daß das in das zweite Rohr ragende Ende der Muffe zwei im Abstand voneinander angeordnete, parallele Schlitze aufweist, die sich in den ersten Abschnitt hineinerstrecken und vier Muffensegmente voneinander trennen, von denen mindestens zwei diametral einandergegenüberliegende mit den Krallen versehen sind, die vorzugsweise in der Achslängsrichtung des zweiten Rohres verlaufen. Die Muffe und die Haube bestehen vorzugsweise aus Kunststoff. Diese Teile lassen sich aus Kunststoff wirtschaftlich herstellen.

Insbesondere läßt sich die Vorrichtung dann verwenden, wenn im zweiten Rohr Wasser oder eine andere Flüssigkeit strömt, der über das erste Rohr ein wasserlösliches Mittel, z.B. ein Desinfektionsmittel, aus einem Behälter zugeführt werden soll. In diesem Fall weist das erste Rohr ein angefastes Ende auf, das dem Wasserzulauf zugewandt ist. Hierdurch wird erreicht, daß das erste Rohr und der angeschlossene Behälter dann mit Wasser gefüllt sind, solange der Spülvorgang andauert. Hierdurch gelangt eine gewisse Menge Lösungsmittel in das zweite Rohr, wenn die Spülung abgeschlossen ist. Beispielsweise kann ein Desinfektionsmittelspender mit der oben beschriebenen Vorrichtung an Rohre für Spülwasser, das Pissoirs zugeleitet wird, angeschlossen werden.

Falls die Verbindung der beiden Rohre wieder gelöst werden soll, kann dies dadurch geschehen, daß die Muffe im Bereich der Dichtung durchgesägt wird.

Weitere Einzelheiten, Vorteile und Merkmale der Erfindung ergeben sich nicht nur aus den Ansprüchen, den diesen zu entnehmenden Merkmalen - für sich und/oder in Kombination -, sondern auch an Hand eines in einer Zeichnung dargestellten Ausführungsbeispiels.

Es zeigen:

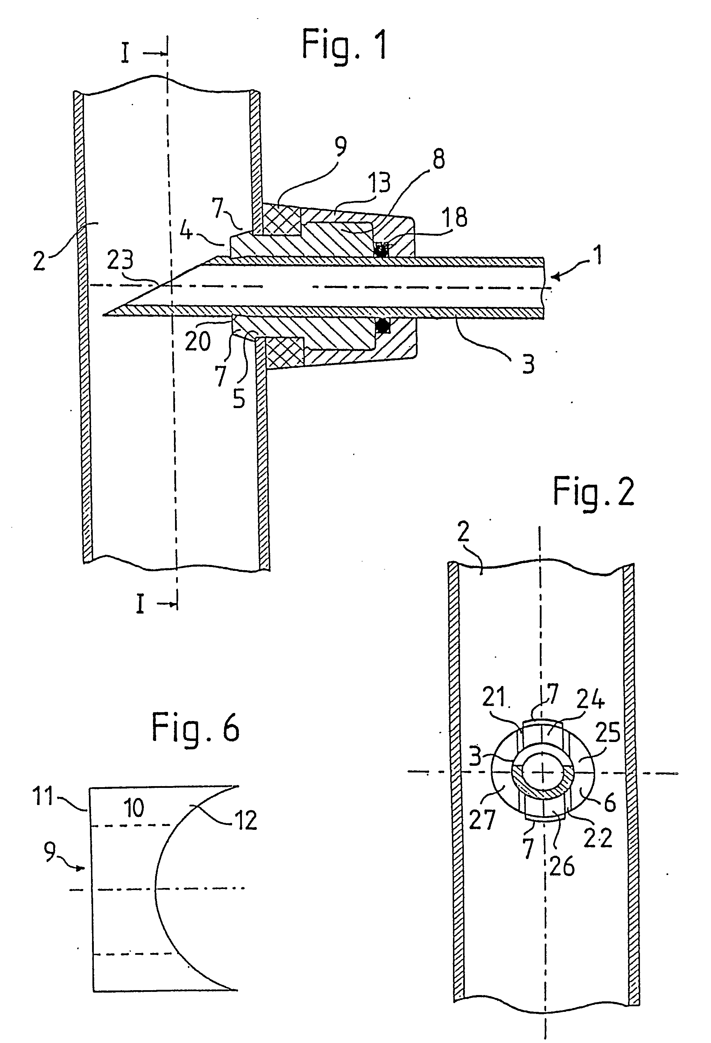

Fig. 1 eine Vorrichtung zur flüssigkeitsdichten Verbindung des Endes eines ersten Rohres mit einem zweiten Rohr im Längsschnitt,

Fig. 2 einen Schnitt längs der Linie I-I der in Fig. 1 dargestellten Vorrichtung,

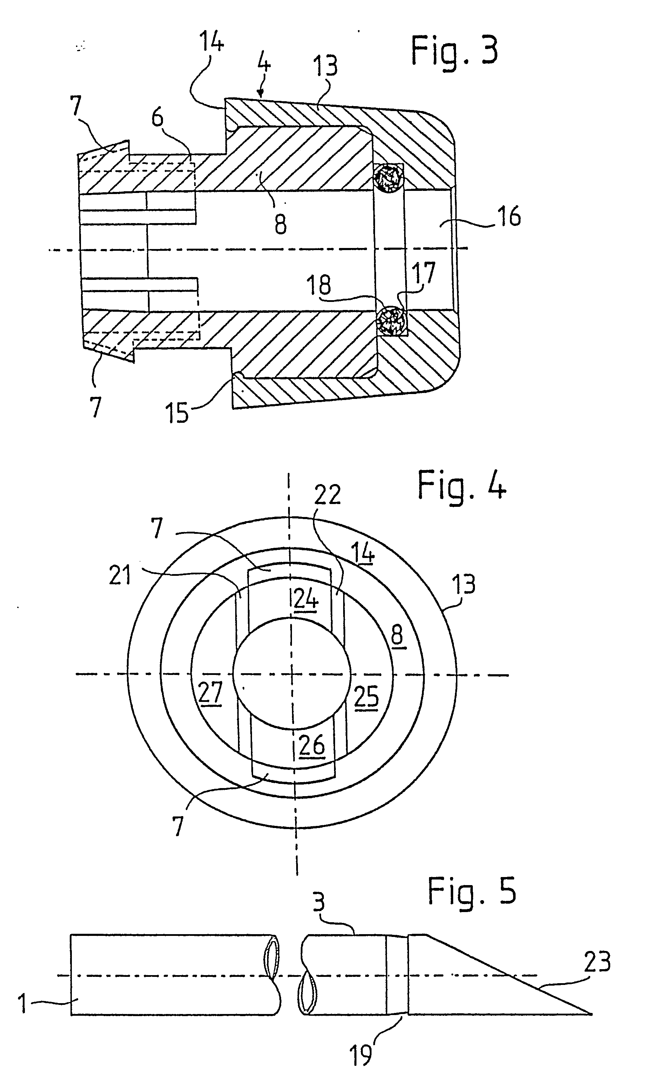

Fig. 3 eine Muffe im Längsschnitt,

Fig. 4 die Muffe gemäß Fig. 3 von vorne,

Fig. 5 das Ende des ersten Rohres von der Seite und

Fig. 6 eine Dichtung in Draufsicht

Eine Vorrichtung zum flüssigkeitsdichten Verbinden des Endes (3) eines ersten Rohres (1) mit einem zweiten Rohr (2), zu dem das Ende (3) untr einem Winkel von etwa 90° verläuft, enthält eine Muffe (4) aus einem elastischen Kunststoff. Die Muffe (4) ist mit ihrem inneren Durchmesser auf den äußeren Durchmesser des ersten Rohres (1) so abgestimmt, daß ein fester Sitz der Muffe (4) auf dem Ende (3) erreicht wird.

Im zweiten Rohr (2) ist eine Öffnung bzw. ein Loch (5) vorgesehen, dessen Durchmesser größer als der Außendurchmessr des ersten Rohres (1) ist. Die Muffe (4) weist einen ersten Abschnitt (6) auf, dessen äußerer Durchmesser auf den Durchmesser des Lochs (5) abgestimmt ist. Am Ende des Abschnitts (6) sind elastische Krallen (7) ausgebildet, die z.B. im Querschnitt sägezahnartig sind. Die radialen Abmessungen zweier diametral aneinandergegenüberliegender, vorzugsweise in Längsachse des zweiten Rohres (2) verlaufender Krallen (7) sind größer als der Durchmesser des Lochs (5). Wenn die Krallen (7) in das Loch (5) eingeschoben werden, vermindern sich ihre radialen Abmessungen, bis sich die Wand des Rohres (2) in Höhe des Abschnitts (6) befindet. Danach dehnen sich die Krallen (7) nach außen aus und verhaken die Muffe (4) am Rohr (2).

Weiterhin weist die Muffe (4) einen an den ersten Abschnitt (6) angrenzenden zweiten Abschnitt (8) auf, der einen größeren Außendurchmesser als der erste Abschnitt (6) hat und eine glatte Außenseite aufweist. Der Abschnitt (6) trägt eine Dichtung (9), die in Fig. 6 näher dargestellt ist. Die Dichtung (9) hat einen hohlzylindrischen Körper (10), dessen eine Stirnseite (11) kreisringförmig ist. Die andere Stirnseite (12) hat die Form eines Teils einer Zylinderoberlfäche. Der Durchmesser dieses Teils entspricht dem Außendurchmesser des Rohres (2). Der Außendurchmesser des Körpers (10) ist größer als der Außendurchmesser des Abschnitts (6).

Auf den Abschnitt (8) ist eine elastische Haube (13) aufgesetzt, die eine kreisringförmige Stirnfläche (14) hat. Der Außendurchmesser des Abschnitts (8) ist an den Innendurchmesser der Haube (13) angepaßt. In Höhe der Stirnfläche (14) sind radial nach innen ragende Vorsprünge (15) vorhanden, die in nicht näher bezeichnete Ausnehmungen im Abschnitt (8) einrasten, um die Haube (13) fest mit dem Abschnitt (8) zu verbinden. Die Stirnseite (14) übt auf die Stirnseite (11) der Dichtung (9) eine Anpreßkraft aus, um eine feste Einspannung der Dichtung (9) zwischen der Muffe (4) und dem Rohr (2) zu bewirken. Es ist auch möglich, auf dem Abschnitt (8) ein Außengewinde anzuordnen und statt einer Haube (13) eine Überwurfmutter zu verwenden.

Die Haube (13) umschließt die Stirnseite des Abschnitts (8). In einem an den zylindrischen Durchlaß (16) der Haube (13) angrenzenden zurückgesetzten Abschnitt (17) ist eine Ringdichtung (18) angeordnet, die bei aufgesetzter Haube (13) zwischen dieser, dem Rohr (1) und dem Abschnitt (8) so eingespannt ist, daß keine Flüssigkeit aus dem Spalt zwischen dem Ende (3) und der Muffe (4) austreten kann.

Das Rohr (1) nahe an seiner im Rohr (2) angeordneten Öffnung eine längs des Umfangs verlaufende Einkerbung (19), die im Querschnitt an Nasen (2) angepaßt ist, die am stirnseitigen Ende des Abschnitts (6) nach innen in die Bohrungen für das Rohr (1) vorspringen. Die Nasen (20) rasten in die Einkerbung (19) ein und fixieren damit das Rohr (1), so daß eine Sicherheit gegen eine axiale Verschiebung erreicht wird. Zugleich wird damit die Länge des in das Rohr (2) hineinragendes Stückes des Rohres (1) festgelegt, so daß einer willkürlichen Anordnung der Muffe in axialer Richtung auf dem Rohr (1) vorgebeugt wird.

Der Abschnitt (6) hat zwei im Abstand voneinander angeordnete parallele Schlitze (21), (22), die von der Stirnseite ausgehen und sich bis in Höhe der Dichtung (9) erstrecken. Die Schlitze (21), (22) trennen vier Muffensegmente (24), (25), (26), (27) voneinander, von denen mindestens zwei diametral einandergegenüberliegende mit den Krallen (7) versehen sind.

Die Schlitze (21), (22) ermöglichen ein seitliches Ausweichen der elastischen Krallen (7) beim Einsticken der Muffe (4) in das Loch (5).

Das Rohr (1) hat eine in das Rohr (2) ragende angefaste Mündung (23).

Das Rohr (2) dient insbesondere als Leitung für Spülwasser, z.B. für ein Pissoir. Diesem Spülwasser wird aus einem nicht dargestellten Desinfektionsmittelspender in Wasser gelöstes Desinfektionsmittel über das Rohr (1) zugeführt. Die dem Wasserzulauf im Rohr (2) zugewandte angefaste Mündung (23) bewirkt, daß das Rohr (1) und der Desinfektionsmittelspender mit Wasser gefüllt sind, wodurch eine desinfektionsmittelhaltige Wasserlösung erzeugt wird. Wird Wasser durch das Rohr (2) geleitet, so gelangt ein Teil über das Rohr (1) zu dem Desinfektionsmittelspender, so daß eine kleine Menge des Desinfektionsmittels dann in das Rohr (2) gelangt, wenn der Spülvorgang beendet ist.

Mit der oben beschriebenen Vorrichtung erübrigen sich Schweiß-und Lötarbeiten, um Verbindungen zwischen zwei Rohren herzustellen. Es sind lediglich einfache Handgriffe erforderlich, um die Muffe (4) mit der Dichtung (9) und der Haube (13) in die Öffnung (5) einzustecken. Durch Krallen (7) der Muffe (4) erfolgt dann ein Arretieren der die zuvor erwähnten Elemente umfassenden Einheit. Anschließend wird das Rohr (1) eingeschoben.

Wenn die Verbindung zwischen den Rohren (1), (2) wieder gelöst werden soll, wird die Haube (13) z.B. an der Grenze der Abschnitte (6) und (8) durchgesägt.

Die Verbindung zwischen den Rohren (1), (2) hat eine gewisse Elastizität, die es ermöglicht, daß der Winkel zwischen beiden Rohren (1), (2) in gewissen Grenzen variiert werden kann. Deshalb ist es nicht erforderlich, die Rohre (1), (2) so zu verlegen, daß ein bestimmter Winkel exakt eingehalten werden muß. Das Ende (3) kann bei in der Öffnung (5) vorhandener Muffe (4), Dichtung (9) und Haube (13) in das Rohr (2) eingesteckt werden. Vor Ort können damit die beiden Rohre (1), (2) ohne Werkzeug miteinander verbunden werden.

**Ansprüche**

1. Vorrichtung zum flüssigkeitsdichten Verbinden des Endes eines ersten Rohres mit einem zweiten Rohr, wobei gegebenenfalls das Ende des ersten Rohres abgeschrägt ist,
**dadurch gekennzeichnet,**
daß das Ende (3) des ersten Rohres (1) von einer Muffe (4) flüssigkeitsdicht umgeben ist, die in ein Loch (5) des zweiten Rohres (2) einrastende, federnde Krallen (7) aufweist, und daß auf der Außenseite der Muffe (4) eine Dichtung (9) angeordnet ist, die flüssigkeitsdicht zwischen dem zweiten Rohr (2) und der Muffe (4) eingespannt ist.

2. Vorrichtung nach Anspruch 1,
**dadurch gekennzeichnet,**
daß die Dichtung mit einer auf die Muffe (4) aufgesetzten Haube (13) eingespannt ist.

3. Vorrichtung nach Anspruch 2,
**dadurch gekennzeichnet,**
daß die Muffe (4) und die Haube (13) eine Einheit bilden.

4. Vorrichtung nach Anspruch 1,
**dadurch gekennzeichnet,**
daß das Ende (3) des ersten Rohres (1) Einkerbungen (19) aufweist, in die Nasen (20) der Muffe (4) einfügbar bzw. einrastbar sind.

5. Vorrichtung nach einem der vorhergehenden Ansprüche,
**dadurch gekennzeichnet,**
daß zwischen der dem zweiten Rohr (2) abgewandten Stirnseite der Muffe (4) und der Haube (13) eine Ringdichtung (18) angeordnet ist.

6. Vorrichtung nach einem der vorhergehenden Ansprüche,
**dadurch gekennzeichnet,**
daß die Muffe (4) einen ersten Abschnitt (6), der einen an die Dichtung (9) angepaßten Außendurchmesser aufweist, und einen zweiten Abschnitt (8) enthält, dessen Außendurchmesser größer als der Durchmesser des ersten Abschnittes ist.

7. Vorrichtung nach einem der vorhergehenden Ansprüche,
**dadurch gekennzeichnet,**
daß das in das zweite Rohr (2) ragende Ende der Muffe (4) zwei im Abstand voneinander angeordnete, parallele Schlitze (21, 22) aufweist, die sich in den ersten Abschnitt (6) hineinerstrecken und vier Muffensegmente (24, 25, 26, 27) voneinander trennen, von denen mindestens zwei diametral einander gegenüberliegende mit den Krallen (7) versehen sind.

8. Vorrichtung nach einem der vorhergehenden Ansprüche,
**dadurch gekennzeichnet,**
daß die Muffe (4) und die Haube (13) aus Kunststoff bestehen.

9. Vorrichtung nach einem der vorhergehenden Ansprüche,
**dadurch gekennzeichnet,**
daß das erste Rohr (1) eine angefaste Mündung (23) aufweist.

10. Vorrichtung nach einem der vorhergehenden Ansprüche,
**dadurch gekennzeichnet,**
daß das erste Rohr (1) mit einem Desinfektionsmittelspender verbunden ist und daß das zweite Rohr
(2) von Spülwasser durchflossen wird.

# Fig. 1

# Fig. 2

# Fig. 6

Fig. 3

Fig. 4

Fig. 5

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | EP-A-0 055 003  (WAVIN B.V.)<br>* Zusammenfassung; Figuren *<br>--- | 1,3,5,6,8 | F 16 L   37/00 |
| X | GB-A-1 442 624  (NYLOPLAST B.V.)<br>* Seite 1, Zeilen 80-93 *<br>--- | 1,3,5,8 | |
| A | DE-A-3 148 818  (K. GERHARD)<br>* Figuren *<br>----- | 1,9 | |

| RECHERCHIERTE SACHGEBIETE (Int. Cl.4) |
|---|
| F 16 L |

Der vorliegende Recherchenbericht wurde für alle Patentansprüche erstellt

| Recherchenort | Abschlußdatum der Recherche | Prüfer |
|---|---|---|
| DEN HAAG | 14-03-1989 | BARTSCH A.W. |